# EUROPÄISCHE PATENTANMELDUNG

(11) **EP 3 824 990 A1**
(43) Veröffentlichungstag der Anmeldung: **26.05.2021**
(21) Anmeldenummer: 20208104.8
(22) Anmeldetag: 17.11.2020
(51) Int. Cl.: B01D 61/14, B01D 67/00, B01D 69/02, B01D 71/80

(54) **MEMBRANEN FÜR DIE FLÜSSIGKEITSAUFBEREITUNG**

(30) Priorität: 22.11.2019 DE 102019131675
(71) Anmelder: Leibniz-Institut für Polymerforschung Dresden e.V., 01069 Dresden (DE)
(72) Erfinder: MEIER-HAACK, Jochen, 01259 Dresden (DE); BUTWILOWSKI, Wladimir, 01445 Radebeul (DE); ODDOY, Tim, 01705 Freital (DE); SCHLENSTEDT, Kornelia, 01307 Dresden (DE)
(74) Vertreter: Rauschenbach, Marion

(57) **Zusammenfassung**

Die Erfindung bezieht sich auf das Gebiet der Polymerchemie und betrifft Membranen, wie sie beispielsweise für die Aufbereitung von wässrigen Lösungen durch Mikro- oder Ultrafiltration eingesetzt werden können.

Die Aufgabe der vorliegenden Erfindung besteht in der Angabe von Membranen, die verbesserte Antifoulingeigenschaften und Gleitreibungseigenschaften aufweisen.

Gelöst wird die Aufgabe durch Membranen, mindestens überwiegend bestehend aus Multiblockcopolymeren der allgemeinen Formel (1) 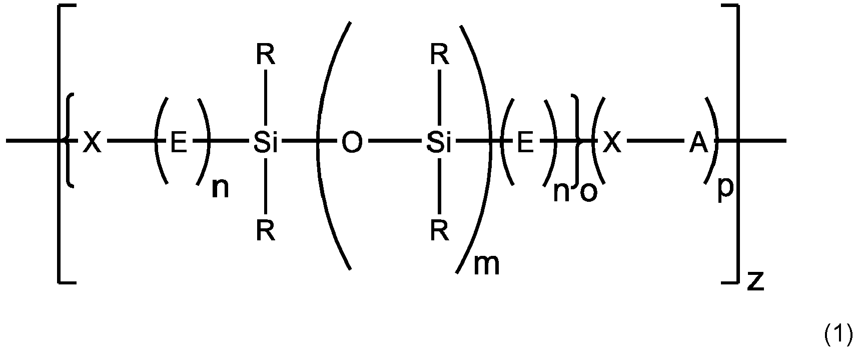 mit
X = Verbindungsstelle
E = C₂- bis C₄-Alkylether
A = weitere, nicht-silikonhaltige Blockkomponente
R = C₁- bis C₄-Alkyl- und/oder Phenylrest
m = 1 < m < 500
n = 0 ≤ n < 100
o = 1 < o < 10
p = 1 < p < 10
z = 1 < z < 25

Molverhältnis von silikonhaltiger Blockkomponente und weiterer Blockkomponente A im Multiblockcopolymer zwischen 5:1 und 1:5
und wobei die silikonhaltigen Blockkomponenten überwiegend an der Oberfläche der Membranen angeordnet sind.

## Beschreibung

Die Erfindung bezieht sich auf das Gebiet der Polymerchemie und betrifft Membranen für die Flüssigkeitsaufbereitung, wie sie beispielsweise in der Lebensmittelindustrie Wasseraufbereitung, Medizintechnik oder Biotechnologie als Membranen für die Aufbereitung von wässrigen Lösungen durch Mikro- oder Ultrafiltration, beispielsweise als Low-Fouling-Membranen, eingesetzt werden können.

Das Fouling stellt trotz weltweiter Forschungsaktivitäten immer noch ein großes Problem bei der Membranfiltration dar. Neben Vorreinigung des Feeds, der Konstruktion, den Betriebsbedingungen und Reinigung der Membranen sind die Eigenschaften der Membranoberfläche selbst ein wesentlicher Aspekt für die Foulingneigung von Membranen (G.M. Giese: J. Polym. Sci. Part B, Polym. Phys. 48 (2010) 1685).

Es sind zahlreiche Ansätze zur Minderung des Membranfoulings durch Modifizierung der Membranoberfläche bekannt. Zumeist wird die Hydrophilierung der Membranoberfläche angestrebt.

D. Rana und T. Matsuura: Chem. Rev. 110 (2010) 2448 geben eine Übersicht zu unterschiedlichen Verfahren zur Oberflächenmodifizierung, die zur Verringerung des Foulings von Membranen führen sollen.

Aus J. Meier-Haack und M. Müller: Macromol. Symp. 188 (2002) 91 ist die Modifizierung von Membranoberflächen mit Polyelektrolyten und Polyelektrolytkomplexen bekannt.

Gemäß Z. Yong et al: J. Membr. Sci. 270 (2006) 162 sind TFC PA-Umkehrosmosemembranen bekannt, die sulfonierte Monomereinheiten in der Polyamidschicht enthalten.

Ein anderer Ansatz zur Lösung der Probleme war der Einsatz von siloxanhaltigen Blockcopolymeren. Jedoch wurden diese siloxanhaltigen Blockcopolymere, die als Materialien an sich seit den frühen 1970er Jahren bekannt sind, aufgrund ihres Aufbaus und der Eigenschaften bisher als Additiv und für dichte Membranen für die Gastrennung eingesetzt.

In WO 2011/110441 A2 werden Blockcopolymere aus linearen Oligo- oder Polysiloxanen und organischen Polymeren beschrieben. OH-terminierte Polysiloxane und OH-terminierte organische Blöcke werden mittels eines Diisocyanats miteinander chemisch gekoppelt.

Membranen aus Polyethersulfon mit 5 Gew.-% Silikonadditiv in der Gießlösung zeigen a) eine Anreicherung des Silikons an der Oberfläche und b) antiadhäsive Eigenschaften getestet für Proteine (BSA) und Bakterien.

Die Herstellung von Siloxan-PSU-Blockcopolymeren haben Noshay et al. (A. Noshay et al. Ind. Eng. Chem. Prod. Res. Develop. 12 (1973) 268) beschrieben, indem sie Silylamin-Hydroxyl-Reaktion durchgeführt haben. Die erhaltenen Materialien wiesen eine erhöhte Elastizität im Vergleich zu reinem PSU auf. Die mechanischen Eigenschaften können durch die Molekulargewichte der PSU- oder PDMS-Blöcke eingestellt werden.

Weiter ist nach der US 2016/0002411 A1 bekannt, dass siloxanhaltige Blockcopolymere als Additive bei der Herstellung von Polymermembranen eingesetzt wurden. Die Herstellung der Additive ist die gleiche wie in WO 2011/110411 A2. Es wurden verbesserte chemische Stabilitäten gegenüber Reinigungschemikalien, wie Natriumhypochlorit, erzielt. Filtrationsversuche mit Flusswasser ergaben, je nach Betriebsweise, eine 4 - 20% höhere Ausbeute. Nach 800 h Betrieb wurden keine signifikanten Änderungen des Rückhaltes beobachtet (siehe auch M. Heijnen et al. Desal. Water Treatm. 69 (2017) 29).

Gemäß der EP 0416376 A2 sind Polyestercarbonat-Polysiloxan-Blockcopolymere mit 5 Gew.-% Siloxananteil bekannt. Diese wurden durch eine Ein-Topf-Zwei-Schritt Synthese erhalten. Spritzguss-Prüfkörper aus diesen Materialien weisen eine deutlich verbesserte Benzinresistenz als Vergleichsproben ohne Siloxananteil auf.

Gemäß DE 10 2010 001 482 A1 sind poröse Silikonformkörper bekannt. Diese werden durch Lösen von Organopolysiloxan-Polyharnstoff-Copolymeren in einem Lösungsmittelgemisch und Abdampfen der Lösungsmittel erhalten, wobei die Siedepunkte der Lösungsmittel mindestens eine Differenz von 30°C aufweisen sollten. Je nach Verfahrensweise werden poröse Formkörper mit dichter oder poröser Oberfläche erhalten, wobei die Porengröße bei 10 µm liegt.

Lösungen des Standes der Technik zur Herstellung von porösen Membranen aus Polydimethylsiloxan (PDMS) weisen den Nachteil auf, dass sie nicht, wie Membranen aus Polyethersulfon (PES) oder Polyvinylidendifluorid (PVDF), mit Hilfe des Phaseninversionsverfahrens hergestellt werden können, da PDMS in der Regel, je nach Molekulargewicht, als viskose Flüssigkeit oder als Wachse vorliegt.

Für die Herstellung poröser Membranen aus PDMS wird beispielsweise nach Kobayashi et al.: J. of Appl. Polymer Science 51 (1994) 483-489 vernetzbare Siloxankomponenten in 1,4-Dioxan als Porenbildner dispergiert und der Porenbildner nach dem Vernetzungsvorgang ausgewaschen. Nach Auswaschen des Porenbildners werden poröse PDMS Membranen erhalten, die jedoch Porengrößen im Bereich von 1 bis 5 µm aufweisen, wenn 45 Gew.-% 1,4-Dioxan verwendet wurde. Bei Dioxangehalten < 25 Gew.-% wurden dichte Membranen erhalten.

Die grundsätzliche Herstellung von porösen Membranen aus Polyethersulfon nach dem Phaseninversionsverfahren (hier Lösungs-Fällungs-Verfahren) ist Stand der Technik (Marcel Mulder in "Basic Principles of Membrane Technology", Kluwer Academic Publishers, Dordrecht Niederlande (1990), Seiten 58 ff).

Beim Phaseninversionsverfahren wird das zu einer Membran zu formende Polymer in einem Lösungsmittel gelöst. Diese Lösung wird auf einer Unterlage mit einer bestimmten Dicke ausgestrichen und anschließend in ein Fällbad getaucht. Das Lösungsmittel ist mit der Fällbadflüssigkeit vollständig mischbar, das Polymer ist jedoch in der Fällbadflüssigkeit unlöslich. Durch den Austausch von Lösungsmittel und Fällbadflüssigkeit wird die Löslichkeitsgrenze des Polymers erreicht und es kommt zu einer Entmischung. Es entsteht eine polymerreiche Phase und eine polymerarme Phase. Der weitere Austausch von Lösungsmittel und Fällbadflüssigkeit führt zum Erstarren der polymerreichen Phase. Nach vollständigem Austausch von Lösungsmittel und Fällbadflüssigkeit ist der Fällprozess beendet und die polymerreiche feste Phase bildet die Membran. Die polymerfreie flüssige Phase bestehend aus Fällbadflüssigkeit füllt das Porenvolumen der Membran.

Nachteilig bei den Lösungen des Standes der Technik ist, dass ihre Antifouling- und Gleitreibungseigenschaften sowie Gewebe- und Körperflüssigkeitsverträglichkeit, insbesondere in medizinischen Anwendungen noch nicht ausreichend gut sind.

Die Aufgabe der vorliegenden Erfindung besteht in der Angabe von Membranen für die Flüssigkeitsaufbereitung, die verbesserte Antifoulingeigenschaften und gleichzeitig auch verbesserte Gleitreibungseigenschaften sowie Gewebe- und Körperflüssigkeitsverträglichkeiten aufweisen.

Die Aufgabe wird durch die in den Ansprüchen angegebene Erfindung gelöst. Vorteilhafte Ausgestaltungen sind Gegenstand der Unteransprüche, wobei die Erfindung auch Kombinationen der einzelnen Ansprüche im Sinne einer und-Verknüpfung mit einschließt, solange sie sich nicht gegenseitig ausschließen.

Die erfindungsgemäßen Membranen für die Flüssigkeitsaufbereitung bestehen mindestens überwiegend aus Multiblockcopolymeren der allgemeinen Formel (1) 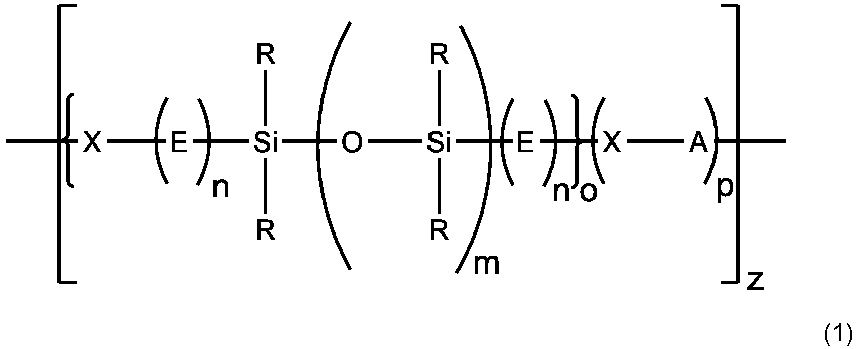 mit
X = Verbindungsstelle
E = C₂- bis C₄-Alkylether
A = weitere, nicht-silikonhaltige Blockkomponente
R = C₁- bis C₄-Alkyl- und/oder Phenylrest
m = 1 < m < 500
n = 0 ≤ n < 100
0 = 1 < 0 < 10
p = 1 < p < 10
z = 1 < z < 25

Molverhältnis von silikonhaltiger Blockkomponente und weiterer Blockkomponente A im Multiblockcopolymer zwischen 5:1 und 1:5
und wobei die silikonhaltigen Blockkomponenten überwiegend an der Oberfläche der Membranen angeordnet sind.

Vorteilhafterweise bestehen die Membranen zu 60 bis 100 Gew.-%, noch vorteilhafterweise zu 80 bis 100 Gew.-% aus den Multiblockcopolymeren gemäß der Formel (1).

Ebenfalls vorteilhafterweise weisen die Multiblockcopolymere gemäß der Formel (1) mindestens eine silikonhaltige Blockkomponente und mindestens eine weitere, nicht-silikonhaltige Blockkomponente A auf, wobei noch vorteilhafterweise als silikonhaltige Blockkomponente Polydimethylsiloxan, Polydiphenylsiloxan, Polymethylphenylsiloxan, Poly(alkylether)-Polysiloxancopolymere oder Mischungen dieser Polymere vorhanden sind, und/oder die silikonhaltigen Blockkomponenten mindestens zwei reaktive Endgruppen, wie vorteilhafterweise OH, NH₂, Thiol, Isocyanat, Carbonsäureanhydrid, Vinyl, Allyl, Alkyn, Azid, Halogen oder Glycidyl, aufweisen, und/oder als weitere, nicht-silikonhaltige Blockkomponenten A Polysulfon, Polyethersulfon, Polyetherethersulfon, Polyetherketon, Polyetheretherketon, Polyester, Polycarbonat, Polyamid, Polyvinylidenfluorid, Polyacrylnitril oder Celluloseacetat oder ein Gemisch dieser Polymere vorhanden sind, und/oder die weiteren, nicht-silikonhaltigen Blockkomponenten A mindestens zwei reaktive Endgruppen, wie OH, NH₂, Thiol, Isocyanat, Carbonsäureanhydrid, Vinyl, Allyl, Alkyn, Azid oder Glycidyl, aufweisen.

Weiterhin vorteilhafterweise sind die Molekulargewichte der silikonhaltigen Blockkomponenten 1000 g/mol bis 50000 g/mol und die Molekulargewichte der weiteren, nicht-silikonhaltigen Blockkomponente A 5000 g/mol bis 25000 g/mol.

Und auch vorteilhafterweise sind im Multiblockcopolymer gemäß der Formel (1) als Verbindungsstelle X aliphatische oder aromatische Harnstoff- oder Urethan- oder Amid- oder Ester- oder Ether- oder Thioether- oder Amidsäure- oder Estersäure- oder Hydroxyether- oder Imid- oder Triazolgruppen vorhanden.

Vorteilhaft ist es auch, wenn bei den Multiblockcopolymeren gemäß der Formel (1)
m zwischen 10 und 200, vorteilhafterweise zwischen 50 und 150 ist,
n zwischen 0 und 80, vorteilhafterweise zwischen 0 und 50 ist,
o zwischen 1 und 6, vorteilhafterweise zwischen 1 und 5 ist,
p zwischen 1 und 8, vorteilhafterweise zwischen 1 und 5 ist,
z zwischen 5 und 20, vorteilhafterweise zwischen 8 und 15 ist,
Molverhältnis von silikonhaltiger Blockkomponente und weiteren Blockkomponente A
im Multiblockcopolymer zwischen 3:1 und 1:3 ist.

Weiterhin vorteilhaft ist es, wenn die Membranen in Form von Flach- oder Hohlfaser- oder Kapillarmembranen vorhanden sind.

Ebenfalls vorteilhaft ist es, wenn die Membranen eine Porengröße von 1 nm bis 1 µm, vorteilhaft zwischen 5 nm und 0,1 µm, aufweisen.

Bei dem erfindungsgemäßen Verfahren zur Herstellung von Membranen für die Flüssigkeitsaufbereitung werden die Membranen mittels Phaseninversionsverfahren hergestellt, wobei eine Lösung aus 5 - 30 Gew.-% Multiblockcopolymer gemäß Formel (1) und 0 - 10 Gew.-% eines nicht-silikonhaltigen Polymers und 0 - 20 Gew.-% von weiteren Lösungsadditiven und 50 - 95 Gew.-% eines mit Wasser mischbaren Lösungsmittels und ein Fällbad aus 80 - 100 Gew.-% Wasser und 0 - 20 Gew.-% weiteren Fällungsadditiven eingesetzt wird.

Vorteilhafterweise werden als mit Wasser mischbare Lösungsmittel N,N-Dimethylacetamid, N,N-Dimethylformamid, N-Methyl-2-pyrrolidon, N-Ethyl-2-pyrrolidon, Dimethylsulfoxid, Aceton, 1,4-Dioxan oder Tetrahydrofuran oder Mischungen dieser Lösungsmittel eingesetzt.

Weiterhin ist es vorteilhaft, wenn als nicht-silikonhaltiges Polymer Polysulfon, Polyethersulfon, Polyetherethersulfon, Polyetherketon, Polyetheretherketon, Polyester, Polycarbonat, Polyamid, Polyvinylidenfluorid, Polyacrylnitril oder Celluloseacetat oder ein Gemisch dieser Polymere eingesetzt wird. Noch vorteilhafter ist es, wenn das nicht-silikonhaltige Polymer die gleiche chemische Struktur, wie die nicht-silikonhaltige Blockkomponente A gemäß der Formel (1), aufweist.

Ebenfalls vorteilhafterweise werden als weiteren Lösungsadditive Wasser, Ethylenglykol, Diethylenglykol, Triethylenglykol, Tetraethylenglykol, Polyethylenglykol und/oder Polyvinylpyrrolidon eingesetzt.

Weiterhin vorteilhafterweise werden als weitere Fällungsadditive Methanol, Ethanol, Propanol, Isopropanol, Ethylengylkol und/oder mit Wasser mischbare Lösungsmittel eingesetzt.

Vorteilhaft ist es auch, wenn die mit Wasser mischbaren Lösungsmittel für die Lösung auch für das Fällbad als Fällungsadditiv eingesetzt werden.

Ebenfalls vorteilhaft ist es, wenn eine Fällbad-Temperatur von 0 °C bis 50 °C, vorteilhafterweise von 15 °C bis 30 °C, eingesetzt wird.

Erfindungsgemäß werden die erfindungsgemäßen Membranen in der Lebensmittelindustrie, Wasseraufbereitung, Biotechnologie oder Medizintechnik verwendet.

Mit der vorliegenden Erfindung wird es erstmals möglich, Membranen für die Flüssigkeitsaufbereitung mit verbesserten Antifoulingeigenschaften und gleichzeitig auch verbesserten Gleitreibungseigenschaften sowie Gewebe- und Körperflüssigkeitsverträglichkeiten anzugeben.

Erreicht wird dies durch Membranen für die Flüssigkeitsaufbereitung, die mindestens überwiegend, vorteilhafterweise zu 60 bis 100 Gew.-%, noch vorteilhafterweise zu 80 bis 100 Gew.-%, aus Multiblockcopolymeren der allgemeinen Formel 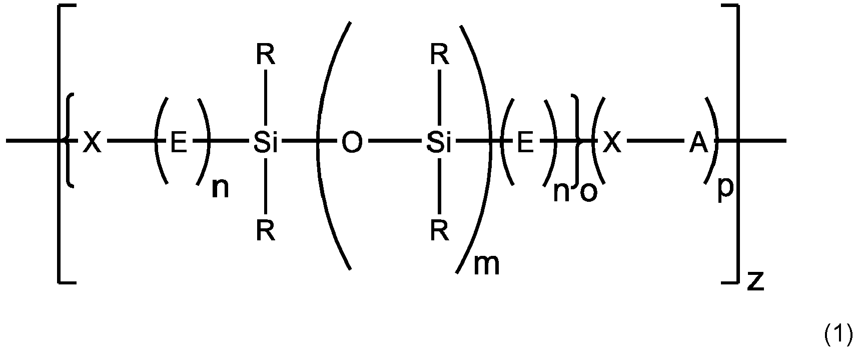 mit
X = Verbindungsstelle
E = C₂- bis C₄-Alkylether
A = weitere, nicht-silikonhaltige Blockkomponente
R = C₁- bis C₄-Alkyl- und/oder Phenylrest
m = 1 < m < 500
n = 0 ≤ n < 100
0 = 1 < 0 < 10
p = 1 < p < 10
z = 1 < z < 25

Molverhältnis von silikonhaltiger Blockkomponente und weiteren, nicht-silikonhaltigen Blockkomponente A im Multiblockcopolymer zwischen 5:1 und 1:5
bestehen.

Bei den erfindungsgemäßen Membranen weisen die Multiblockcopolymere gemäß der Formel (1) mindestens eine silikonhaltige Blockkomponente und mindestens eine weitere, nicht-silikonhaltige Blockkomponente A auf.

Vorteilhafterweise sind als silikonhaltige Blockkomponente Polydimethylsiloxan, Polydiphenylsiloxan, Polymethylphenylsiloxan, Poly(alkylether)-Polysiloxancopolymere oder Mischungen dieser Polymere vorhanden und weisen ebenfalls vorteilhafterweise mindestens zwei reaktive Endgruppen, wie vorteilhafterweise OH, NH₂, Thiol, Isocyanat, Carbonsäureanhydrid, Vinyl, Allyl, Alkyn, Azid oder Glycidyl, auf.

Als weitere, nicht-silikonhaltige Blockkomponente A sind vorteilhafterweise Polysulfon, Polyethersulfon, Polyetherethersulfon, Polyetherketon, Polyetheretherketon, Polyester, Polycarbonat, Polyamid, Polyvinylidenfluorid, Polyacrylnitril oder Celluloseacetat oder ein Gemisch dieser Polymere vorhanden und weisen ebenfalls vorteilhafterweise mindestens zwei reaktive Endgruppen, wie vorteilhafterweise OH, NH₂, Thiol, Isocyanat, Carbonsäureanhydrid, Vinyl, Allyl, Alkyn, Azid, Halogen oder Glycidyl, auf.

Die Molekulargewichte der silikonhaltigen Blockkomponente sind vorteilhafterweise im Bereich von 1000 g/mol und 50000 g/mol und die Molekulargewichte der weiteren, nicht-silikonhaltigen Blockkomponente A sind vorteilhafterweise im Bereich von 5000 g/mol bis 25000 g/mol.

Weiter sind vorteilhafterweise als Verbindungsstelle X im silikonhaltigen Multiblockcopolymer gemäß der Formel (1) aliphatische oder aromatische Harnstoff- oder Urethan- oder Amid- oder Ester- oder Ether- oder Thioether- oder Amidsäure- oder Estersäure- oder Hydroxyether- oder Imid- oder Triazolgruppen vorhanden. Es ist ebenfalls vorteilhaft, wenn bei den silikonhaltigen Multiblockcopolymeren gemäß der Formel (1)
m zwischen 10 und 400, vorteilhafterweise zwischen 50 und 300 ist,
n zwischen 0 und 80, vorteilhafterweise zwischen 0 und 50 ist,
o zwischen 1 und 6, vorteilhafterweise zwischen 1 und 5 ist,
p zwischen 1 und 8, vorteilhafterweise zwischen 1 und 5 ist,
z zwischen 3 und 20, vorteilhafterweise zwischen 8 und 15 ist,

Molverhältnis von silikonhaltigem Blockkomponente und der weiteren, nicht-silikonhaltigen Blockkomponente A im Multiblockcopolymer zwischen 3:1 und 1:3

Erfindungsgemäß sind weiterhin die silikonhaltigen Blockkomponenten in den erfindungsgemäßen Membranen überwiegend an der Oberfläche der Membranen angeordnet. Erfindungsgemäß reichern sich die silikonhaltigen Blockkomponenten an den Membranoberflächen an, sofern die Membranen nicht vollständig aus den erfindungsgemäßen Multiblockcopolymeren mit silikonhaltigen Blockkomponenten gemäß der Formel (1) bestehen.

Die erfindungsgemäßen Membranen können in Form von Flach- oder Hohlfaser- oder Kapillarmembranen vorhanden sein.

Bei dem Multiblockcopolymer gemäß Formel (1) ist die silikonhaltige Blockkomponente chemisch an die weitere, nicht-silikonhaltige Blockkomponente A gebunden. Die Kopplung der Blockkomponenten erfolgt entweder direkt über die reaktiven Endgruppen der silikonhaltigen Blockkomponenten und der weiteren, nicht-silikonhaltigen Blockkomponenten A, z. B. über OH- und Säureanhydrid-Gruppen, oder es ist ein Koppler, z. B. Disäurechlorid, vorhanden, der sowohl mit den reaktiven Endgruppen der silikonhaltigen Blockkomponenten als auch mit den reaktiven Endgruppen der weiteren, nicht-silikonhaltigen Blockkomponenten A reagieren kann.

Da die silikonhaltige Blockkomponente chemisch an die weitere, nicht-silikonhaltige Blockkomponente A gebunden ist, kann die silikonhaltige Blockkomponente der Multiblockcopolymere beim Membranbildungsprozess und bei der Anwendung der Membranen nicht ausgewaschen werden.

Bei dem erfindungsgemäßen Verfahren zur Herstellung von Membranen für die Flüssigkeitsaufbereitung werden die Membranen mittels Phaseninversionsverfahren hergestellt.

Die für dieses Verfahren notwendige Gießlösung besteht dabei aus 5 - 30 Gew.-% Multiblockcopolymer gemäß der Formel (1) und 0 - 10 Gew.-% eines nicht-silikonhaltigen Polymers und 0 - 20 Gew.-% weiterer Lösungsadditive und 50 - 95 Gew.-% eines mit Wasser mischbaren Lösungsmittels. Weiterhin wird ein Fällbad aus 80 - 100 Gew.-% Wasser und 0 - 20 Gew.-% weiterer Fällungsadditive eingesetzt.

Als mit Wasser mischbare Lösungsmittel können z. B. N,N-Dimethylacetamid (DMAc), N,N-Dimethylformamid (DMF), N-Methyl-2-pyrrolidon (NMP), N-Ethyl-2-pyrrolidon (NEP), Dimethylsulfoxid (DMSO), Aceton, 1,4-Dioxan oder Tetrahydrofuran (THF) oder Mischungen dieser Lösungsmittel eingesetzt werden.

Als nicht-silikonhaltige Polymere können Polysulfon, Polyethersulfon, Polyetherethersulfon, Polyetherketon, Polyetheretherketon, Polyester, Polycarbonat, Polyamid, Polyvinylidenfluorid, Polyacrylnitril oder Celluloseacetat oder ein Gemisch dieser Polymere eingesetzt werden, wobei es vorteilhaft ist, wenn das nicht-silikonhaltige Polymer die gleiche chemische Struktur, wie die nicht-silikonhaltige Blockkomponente A gemäß der Formel (1), aufweist.

Weitere Lösungsadditive, wie Wasser, Ethylenglykol, Diethylenglykol, Triethylenglykol, Tetraethylenglykol, Polyethylenglykol und/oder Polyvinylpyrrolidon können vorteilhafterweise eingesetzt werden.

Als weitere Fällungsadditive können Methanol, Ethanol, Propanol, Isopropanol, Ethylenglykol und/oder mit Wasser mischbare Lösungsmittel eingesetzt werden.

Eine besonders vorteilhafte Vorgehensweise besteht darin, wenn die mit Wasser mischbaren Lösungsmittel für die Lösung auch für das Fällbad als Fällungsadditiv eingesetzt werden.

Weiterhin vorteilhafterweise wird in dem Fällbad mit einer Temperatur von 0 °C bis 50 °C, vorteilhafterweise von 15 °C bis 30 °C, gearbeitet.

Die Herstellung der erfindungsgemäßen Membranen bestehend mindestens überwiegend aus silikonhaltigen Multiblockcopolymeren gemäß der Formel (1) erfolgt nach dem Phaseninversionsverfahren. Hierzu wird eine Gießlösung bestehend aus 5 - 30 Gew.-% des silikonhaltigen Multiblockcopolymers gemäß Formel (1), 50 - 95 Gew.-% eines mit Wasser mischbaren Lösungsmittels oder einer Mischung aus mit Wasser mischbaren Lösungsmitteln und 0 - 10 Gew.-% eines nicht-silikonhaltigen Polymers und 0 - 20 Gew.-% weiterer Lösungsadditive hergestellt. Diese Lösung wird mittels Rakeltechnik mit einer Spalthöhe von 50 bis 300 µm vorzugsweise 70 bis 200 µm auf eine Unterlage aufgebracht. Im Falle, dass die Unterklage ein Vlies ist, kann dieses vor dem Auftragen der Gießlösung mit dem mit Wasser mischbaren Lösungsmittel oder Lösungsmittelgemisch getränkt werden. Nach einer Wartezeit von 0 bis 600 s, vorteilhafterweise 15 bis 120 s, werden die Protomembranen in ein Fällbad eingetaucht, das zu 80 - 100% aus Wasser und 0 - 20% Fällungsadditive, wie z. B. Methanol, Ethanol, Propanol, Isopropanol, Ethylenglykol und/oder mit Wasser mischbare Lösungsmittel, besteht. Die Membranen werden mit Wasser gewaschen und abschließend mit Glycerin konserviert oder bis zur weiteren Verwendung in VE-Wasser, dem 0,1% NaN₃ zugesetzt sind, bei 4°C gelagert.

Für die erfindungsgemäßen Membranen ist es von Bedeutung, dass die Multiblockcopolymere gemäß der allgemeinen Formel (1) nicht nur als Additiv zu den Membranmaterialien zugegeben werden, sondern dass mindestens im überwiegenden Anteil, vorteilhafterweise zu 60 bis 100 Gew.-%, noch vorteilhafterweise zu 80 bis 100 Gew.-% in der fertigen Membran enthalten ist. Es hat sich auch als vorteilhaft herausgestellt, eine erfindungsgemäße Membran vollständig aus dem Multiblockcopolymer gemäß der allgemeinen Formel (1) herzustellen und anzugeben.

Weiterhin unterscheiden sich die porösen Membranen aus Polydimethylsiloxan (PDMS) nach dem Stand der Technik von den erfindungsgemäßen Membranen insbesondere dadurch, dass die PDMS-Membranen nach dem Stand der Technik für die Flüssigkeitsaufbereitung auf Grund der breiten Porengrößenverteilung ungeeignet sind. Zudem besteht die Gefahr, dass sich bei ungenügendem Anteil Porenbildner ein dichter Film auf der PDMS-Membranoberseite bildet, wodurch die Anwendung zur Flüssigkeitsaufbereitung erst recht nicht möglich ist. Ferner müssen diese PDMS-Membranen nach dem Stand der Technik relativ dick sein (mehrere 100 µm), um eine ausreichende mechanische Stabilität zu erreichen.

Die erfindungsgemäßen Membranen zeichnen sich durch ein geringes Biofouling und eine hohe Verträglichkeit mit lebendem Gewebe und Körperflüssigkeiten und verbesserten Gleit-Reibungseigenschaften aus.

Solche guten Gleiteigenschaften sind vor allem bei der Anwendung vorteilhaft, z.B. in Kathetern, die sich so leichter applizieren oder entfernen lassen, da das Gewebe weniger an der Oberfläche haften kann.

Ein weiter Vorteil der erfindungsgemäßen Membran ist der hohe Anteil der Silikonkomponente in der Membran, was der Membran zusätzlich elastische Eigenschaften und eine geringe Oberflächenenergie verleiht, wodurch ebenfalls die Anhaftung von Gewebe oder Bakterien oder Proteinen erschwert oder verhindert, was dazu führt, dass weniger Reinigungszyklen für die Membran realisiert werden müssen, wodurch auch die Lebenszeit der Membranen verlängert wird.

Durch die Einsparung der Anzahl der Reinigungszyklen können auch die Prozesskosten verringert werden.

Und schließlich ist ein Vorteil der erfindungsgemäßen Membranen, dass sie eine hohe Verträglichkeit mit lebendem Gewebe und Körperflüssigkeiten zeigen.

Durch die vorteilhaften Eigenschaften der erfindungsgemäßen Membranen kann zusätzlich deren Lebenszeit verlängert werden.

Außerdem können sich durch die verbesserten Eigenschaften der erfindungsgemäßen Membranen neue Anwendungsfelder, wie z. B. in der Medizintechnik oder Biotechnologie ergeben.

Nachfolgend wird die Erfindung an mehreren Ausführungsbeispielen näher erläutert.

### Vergleichsbeispiel 1

### Herstellung einer Membran aus reinem Polysulfon (PSU; Solvay Udel P3500 LCD)

Ein Vlies (novatexx 2484; Freudenberg Filtration Techonologies SE & Co. KG) wird mit doppelseitigem Klebeband auf einer Glasplatte fixiert. Dass Vlies wird mit einer Mischung aus NMP/Wasser 4:1 getränkt. Überschüssige Tränklösung wird nach 10 min Wartezeit mit einer Rakel entfernt. Das Aufbringen der Gießlösung, bestehend aus 20% PSU in 80% NMP, auf das Vlies erfolgt mit einer Rakel (Spalthöhe 100 µm) bei einer Ziehgeschwindigkeit von 4,7 mm/sec. Die Protomembran wird 15 sec nach dem Ziehvorgang in ein Fällbad (Wasser) bei 23°C getaucht und 10 min darin belassen. Anschließend wird die Membran von der Glasplatte abgelöst und mit VE-Wasser bei Raumtemperatur unter mehrmaligem Wasserwechsel gewaschen. Bis zur weiteren Nutzung wird die Membran in VE-Wasser, dem 0,1% NaN₃ zugefügt ist, im Kühlschrank gelagert.

Die so hergestellte Membran weist Kennwerte auf, die in Tabelle 1 angegeben sind.

### Beispiel 2:

a) Herstellung der weiteren, nicht-silikonhaltigen Blockkomponente A als OHterminiertes Polysulfon 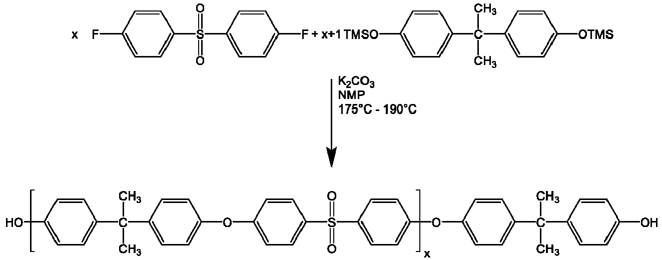 50 mmol (12,713 g) 4,4'-Difluordiphenylsulfon und 51 mmol (19,006 g) 4,4'-BisTrimethylsiloxy-Bisphenol A werden in 50 ml N-Methylpyrrolidon (NMP) gelöst und mit 75 mmol (10,37 g) Kaliumcarbonat versetzt. Der Ansatz wird für 8 h bei 175 °C unter einem leichten Argonstrom gerührt. Danach wird die Temperatur für 2 h auf 190°C erhöht und weitere 100 mg 4,4'-BisTrimethylsiloxy-Bisphenol A zugegeben. Nach dem Abkühlen wird das Reaktionsprodukt in 1000 ml Ethanol unter Zusatz von 5 ml konzentrierter Salzsäure gefällt. Das Produkt wird abgesaugt und mit 250 ml Ethanol für 5 h bei 50°C gewaschen, abgesaugt und bei 100°C im Vakuum getrocknet. Es wurden Molekulargewichte von Mₙ = 9000 g/mol und M_{w} 24500 g/mol durch GPC (CHCl₃; PS-Standard) ermittelt. Das Mₙ ermittelt durch ¹H-NMR beträgt 18350 g/mol (x = 41).
b) Synthese des Multiblockcopolymers gemäß der
   Formel (1) aus einer silikonhaltigen Blockkomponente (PDMS) und einer weiteren, nicht-silikonhaltigen Blockkomponente A (Polysulfon). 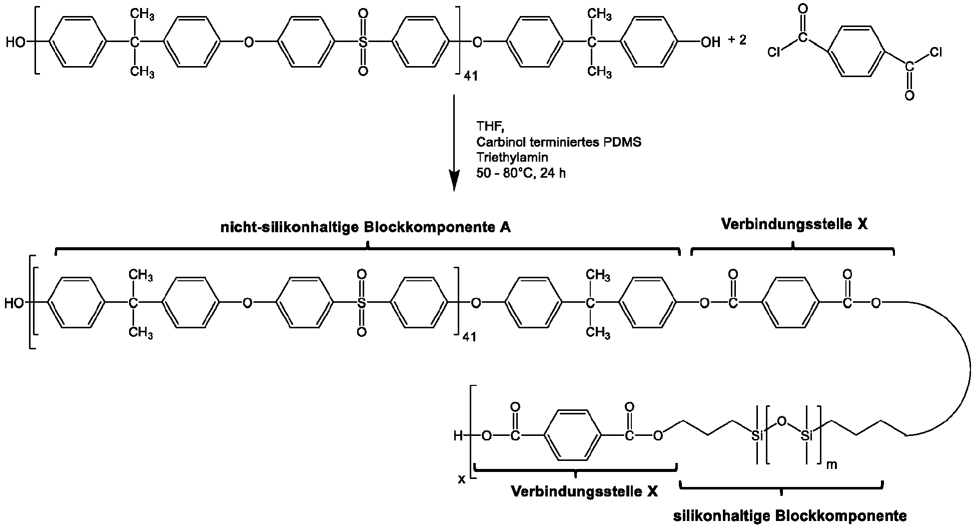 4,04 mmol (0,82 g) Terephthalsäuredichlorid (Verbindungsstelle X) und 8 mmol trockenes Triethylamin werden in 10 mL trockenem Tetrachlorethan gelöst. Zu dieser Lösung werden 2 mmol (36,7 g) des Polysulfons (Polymer A) aus (1) und 2 mmol (2,4 g) einer silikonhaltigen Blockkomponente (Carbinolterminiertes Polydimethylsiloxan, Fluorochem LTD, DMS-C15) mit einer Molmasse von 1200 g/mol (m = 12), gelöst in 50 mL trockenem THF tropfenweise zugegeben (ca. 1 h). Die Reaktionslösung wird 3 h bei Raumtemperatur und 1 h bei 90°C gerührt, wobei eine hochviskose Lösung entsteht. Danach wird das THF abdestilliert und für weitere 8 h bei 90°C gerührt. Nach dem Abkühlen wird die Reaktionsmischung mit 10 mL Tetrachlorethan verdünnt und für weitere 8 h gerührt (homogenisiert). Das Reaktionsprodukt wird abschließend in 1000 mL Ethanol gefällt, mehrfach mit Ethanol gewaschen und bei 100°C im Vakuum getrocknet.
   Die Werte des Multiblockcopolymers sind:
   NMR: Einbaurate PDMS 128%
   GPC: Mw 49000 g/mol (CHCl₃; PS-Standard)
c) Herstellung einer Membran aus dem Multiblockcopolymer gemäß b)

### Herstellung Gießlösung:

29 g des unter (2) hergestellten Polymers wird in einer Mischung aus 70 g Dimethylacetamid (DMAc) und 1 g Wasser unter Rühren gelöst. Die Lösung wird im Umlufttrockenschrank für eine Stunde bei 90°C entgast.

### Herstellung Membran:

Ein Vlies (novatexx 2484; Freudenberg Filtration Techonologies SE & Co. KG) wird mit doppelseitigem Klebeband auf einer Glasplatte fixiert. Das Aufbringen der Gießlösung auf das Vlies erfolgt mit einer Rakel (Spalthöhe 100 µm) bei einer Ziehgeschwindigkeit von 4,7 mm/sec. Die Protomembran wird 30 sec. nach dem Ziehvorgang in ein Fällbad (Wasser) bei 23°C getaucht und 10 min darin belassen. Anschließend wird die Membran von der Glasplatte abgelöst und mit VE-Wasser bei Raumtemperatur unter mehrmaligem Wasserwechsel gewaschen. Bis zur weiteren Nutzung wird die Membran in VE-Wasser, dem 0,1% NaN₃ zugefügt ist, im Kühlschrank gelagert.

### Beispiel 3

Gemäß Beispiel 2 wird ein silikonhaltiges Multiblockcopolymer gemäß b) unter Verwendung einer silikonhaltigen Blockkomponente (Aminopropylterminiertes Polydimethylsiloxan; Merck KG aA, Katalognr. 481688) mit einem Molekulargewicht Mn = 2500 g/mol (m = 31) und Polysulfon als weiterer, nicht-silikonhaltiger Blockkomponente A mit einem Molekulargewicht Mn = 10700 g/mol hergestellt. Weiter wird daraus ebenfalls gemäß Beispiel 2 eine Membran hergestellt.

Die Werte des Multiblockcopolymers sind:
NMR: Einbaurate PDMS 89%
GPC: Mw 51600 g/mol (CHCl₃; PS-Standard)

### Beispiel 4

Gemäß Beispiel 2 wird ein silikonhaltiges Multiblockcopolymer unter Verwendung einer silikonhaltigen Blockkomponente (Bernsteinsäureanhydrid terminiertes Polydimethylsiloxan; ABCR Deutschland, Katalognr. AB130292) mit einem Molekulargewicht Mn = 1200 g/mol und Polyethersulfon als weiterer, nicht-silikonhaltiger Blockkomponente A mit einem Molekulargewicht Mn = 10700 g/mol hergestellt. Weiter wird daraus ebenfalls gemäß Beispiel 2 eine Membran hergestellt.

Die Werte des Multiblockcopolymers sind:
NMR: Einbaurate PDMS 100%
GPC: Mw 49000 g/mol (CHCl₃; PS-Standard)

Die Membran zeigt eine deutlich verbesserte Blutkompatibilität im Vergleich zu einer Membran aus reinem Polysulfon gemäß Vergleichsbeispiel 1.

### Beispiel 5

Gemäß Beispiel 2 wird ein silikonhaltiges Multiblockcopolymer gemäß b) unter Verwendung einer silikonhaltigen Blockkomponente (Aminopropylterminiertes Polydimethylsiloxan ABCR, Deutschland, Katalognr. AB153374) mit einem Molekulargewicht Mn = 25000 g/mol (m = 331) und Polysulfon als weiterer, nicht-silikonhaltiger Blockkomponente A mit einem Molekulargewicht Mn = 17000 g/mol hergestellt. Weiter wird daraus ebenfalls gemäß Beispiel 2 eine Membran hergestellt, wobei die Gießlösung 18 Ma.-% des silikonhaltigen Multiblockcopolymers und 2 Ma.-% reines Polysulfon (Solvay Udel P3500 LCD) enthält.

Die Werte des Multiblockcopolymers sind:
NMR: Einbaurate PDMS 75%
GPC: Mw 59500 g/mol (CHCl₃; PS-Standard)

Die Membran zeigt eine deutlich verbesserte Blutkompatibilität und verbesserte Gleit-Reibungseigenschaften im Vergleich zu einer Membran aus reinem Polysulfon gemäß Vergleichsbeispiel 1.

### Durchführung Filtrationsversuche an den Membranen zu den Beispielen 1 bis 5

Membranen mit jeweils einer Größe von 23x6 cm² je Beispiel 1 bis 5 werden in einer cross-flow Filtrationszelle (Simatec, Deutschland) eingebaut. Die aktive Fläche beträgt 85 cm². Die Bestimmung der Permeabilitäten J erfolgt mit einer Simatec LSPa05SPS unter Verwendung einer Pufferlösung (pH 6,8) (Jᵥ vor BSA) mit einem Volumenstrom von 30 L/h und einem konstanten Permeatvolumenstrom von 0,24 L/h, wobei der transmembrane Druck automatisch nachgeregelt wird. Die Foulingversuche werden mit einer Rinderserumalbumin-Lösung (BSA) (c = 1g/L in Pufferlösung; pH 6,8) durchgeführt. Nach der BSA Filtration wird die Membran mit Pufferlösung für 1h gespült (Volumenstrom 60 L/h, drucklos) und danach die Wasserpermeabilität unter Verwendung der Pufferlösung bestimmt (Wert: Jₙ in Tabelle 2)

Die so hergestellten Membranen weisen Kennwerte auf, die in Tabelle 1 angegeben sind.

In den Tabellen 1 und 2 sind verschiedene Kennwerte der Membranen des Vergleichsbeispiels und der Beispiele 2 bis 5 angegeben, sowie deren chemische Zusammensetzung, die über NMR-Messungen ermittelt wurden und deren chemische Zusammensetzung der Oberflächen der Membranen, die mittels EDX-Messungen ermittelt wurden.

**Tabelle 1: Eigenschaften der Membranen**

| Probe | Kontaktwinkel (°) | Jᵥ (L/m²hbar) | Jₙ (L/m²hbar) |
|---|---|---|---|
| Vergleichsbeispiel 1 | 73 | 72 | 62 |
| Beispiel 2 | 92 | 9 | 7 |
| Beispiel 3 | 89 | 7 | 2 |
| Beispiel 4 | 90 | 10 | 8 |
| Beispiel 5 | 95 | 52 | 51 |

**Tabelle 2: Vergleich Silikongehalt im Membranpolymer und an der Membranoberfläche**

| Probe | S:Si (Bulk) (NMR) | S:Si (Oberfläche) (EDX) | Anreicherungsfaktor |
|---|---|---|---|
| Vergleichsbeispiel 1 | 0 | 0 | - |
| Beispiel 2 | 1:0,23 | 1:0,9 | 3,9 |
| Beispiel 3 | 1:0,49 | 1:0,9 | 1,8 |
| Beispiel 4 | 1:1,11 | 1:3,2 | 2,9 |
| Beispiel 5 | 1:2,35 | 1:5,4 | 2,3 |

## Patentansprüche

1. Membranen für die Flüssigkeitsaufbereitung, mindestens überwiegend bestehend aus Multiblockcopolymeren der allgemeinen Formel (1) 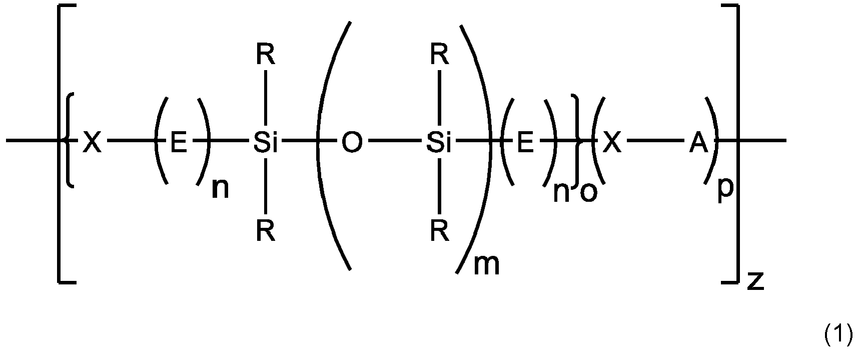 mit
X = Verbindungsstelle
E = C₂- bis C₄-Alkylether
A = weitere, nicht-silikonhaltige Blockkomponente
R = C₁- bis C₄-Alkyl- und/oder Phenylrest
m = 1 < m < 500
n = 0 ≤ n < 100
0 = 1 < 0 < 10
p = 1 < p < 10
z = 1 < z < 25
Molverhältnis von silikonhaltiger Blockkomponente und weiterer Blockkomponente A im Multiblockcopolymer zwischen 5:1 und 1:5
und wobei die silikonhaltigen Blockkomponenten überwiegend an der Oberfläche der Membranen angeordnet sind.

2. Membranen nach Anspruch 1, bei denen die Membranen zu 60 bis 100 Gew.-%, noch vorteilhafterweise zu 80 bis 100 Gew.-% aus den Multiblockcopolymeren gemäß der Formel (1) bestehen.

3. Membranen nach Anspruch 1, bei denen die Multiblockcopolymere gemäß der Formel (1) mindestens eine silikonhaltige Blockkomponente und mindestens eine weitere, nicht-silikonhaltige Blockkomponente A aufweisen, wobei vorteilhafterweise als silikonhaltige Blockkomponente Polydimethylsiloxan, Polydiphenylsiloxan, Polymethylphenylsiloxan, Poly(alkylether)-Polysiloxancopolymere oder Mischungen dieser Polymere vorhanden sind, und/oder wobei vorteilhafterweise die silikonhaltigen Blockkomponenten mindestens zwei reaktive Endgruppen, wie vorteilhafterweise OH, NH₂, Thiol, Isocyanat, Carbonsäureanhydrid, Vinyl, Allyl, Alkyn, Azid, Halogen oder Glycidyl, aufweisen, und/oder wobei vorteilhafterweise als weitere, nicht-silikonhaltige Blockkomponenten A Polysulfon, Polyethersulfon, Polyetherethersulfon, Polyetherketon, Polyetheretherketon, Polyester, Polycarbonat, Polyamid, Polyvinylidenfluorid, Polyacrylnitril oder Celluloseacetat oder ein Gemisch dieser Polymere vorhanden sind, und/oder wobei vorteilhafterweise die weiteren, nicht-silikonhaltigen Blockkomponenten A mindestens zwei reaktive Endgruppen, wie OH, NH₂, Thiol, Isocyanat, Carbonsäureanhydrid, Vinyl, Allyl, Alkyn, Azid oder Glycidyl, aufweisen.

4. Membranen nach Anspruch 1, bei denen die Molekulargewichte der silikonhaltigen Blockkomponenten 1000 g/mol bis 50000 g/mol und die Molekulargewichte der weiteren, nicht-silikonhaltigen Blockkomponente A 5000 g/mol bis 25000 g/mol sind.

5. Membranen nach Anspruch 1, bei denen im Multiblockcopolymer gemäß der Formel (1) als Verbindungsstelle X aliphatische oder aromatische Harnstoff- oder Urethan- oder Amid- oder Ester- oder Ether- oder Thioether- oder Amidsäure- oder Estersäure- oder Hydroxyether- oder Imid- oder Triazolgruppen vorhanden sind.

6. Membranen nach Anspruch 1, bei denen bei den Multiblockcopolymeren gemäß der Formel (1)
m zwischen 10 und 200, vorteilhafterweise zwischen 50 und 150 ist,
n zwischen 0 und 80, vorteilhafterweise zwischen 0 und 50 ist,
o zwischen 1 und 6, vorteilhafterweise zwischen 1 und 5 ist,
p zwischen 1 und 8, vorteilhafterweise zwischen 1 und 5 ist,
z zwischen 5 und 20, vorteilhafterweise zwischen 8 und 15 ist,
Molverhältnis von silikonhaltiger Blockkomponente und weiteren Blockkomponente A im Multiblockcopolymer zwischen 3:1 und 1:3 ist.

7. Membranen nach Anspruch 1, bei denen die Membranen in Form von Flach- oder Hohlfaser- oder Kapillarmembranen vorhanden sind.

8. Membranen nach Anspruch 1, bei denen eine Porengröße von 1 nm bis 1 µm, vorteilhaft zwischen 5 nm und 0,1 µm, vorliegt.

9. Verfahren zur Herstellung von Membranen für die Flüssigkeitsaufbereitung, bei dem die Membranen mittels Phaseninversionsverfahren hergestellt werden, wobei eine Lösung aus 5 - 30 Gew.-% Multiblockcopolymer gemäß Formel (1) und 0 - 10 Gew.-% eines nicht-silikonhaltigen Polymers und 0 - 20 Gew.-% von weiteren Lösungsadditiven und 50 - 95 Gew.-% eines mit Wasser mischbaren Lösungsmittels und ein Fällbad aus 80 - 100 Gew.-% Wasser und 0 - 20 Gew.-% weiteren Fällungsadditiven eingesetzt wird.

10. Verfahren nach Anspruch 9, bei dem als mit Wasser mischbare Lösungsmittel N,N-Dimethylacetamid, N,N-Dimethylformamid, N-Methyl-2-pyrrolidon, N-Ethyl-2-pyrrolidon, Dimethylsulfoxid, Aceton, 1,4-Dioxan oder Tetrahydrofuran oder Mischungen dieser Lösungsmittel eingesetzt werden.

11. Verfahren nach Anspruch 9, bei dem als nicht-silikonhaltiges Polymer Polysulfon, Polyethersulfon, Polyetherethersulfon, Polyetherketon, Polyetheretherketon, Polyester, Polycarbonat, Polyamid, Polyvinylidenfluorid, Polyacrylnitril oder Celluloseacetat oder ein Gemisch dieser Polymere eingesetzt wird, wobei das nicht-silikonhaltige Polymer vorteilhafterweise die gleiche chemische Struktur, wie die nicht-silikonhaltige Blockkomponente A gemäß der Formel (1), aufweist.

12. Verfahren nach Anspruch 9, bei dem als weiteren Lösungsadditive Wasser, Ethylenglykol, Diethylenglykol, Triethylenglykol, Tetraethylenglykol, Polyethylenglykol und/oder Polyvinylpyrrolidon eingesetzt werden.

13. Verfahren nach Anspruch 9, bei dem als weitere Fällungsadditive Methanol, Ethanol, Propanol, Isopropanol, Ethylengylkol und/oder mit Wasser mischbare Lösungsmittel eingesetzt werden.

14. Verfahren nach Anspruch 9, bei dem die mit Wasser mischbaren Lösungsmittel für die Lösung auch für das Fällbad als Fällungsadditiv eingesetzt werden.

15. Verfahren nach Anspruch 9, bei dem eine Fällbad-Temperatur von 0 °C bis 50 °C, vorteilhafterweise von 15 °C bis 30 °C, eingesetzt werden.

16. Verwendung von Membranen gemäß den Ansprüchen 1 bis 8 und hergestellt nach einem Verfahren gemäß den Ansprüchen 9 bis 15 in der Lebensmittelindustrie, Wasseraufbereitung, Biotechnologie oder Medizintechnik eingesetzt werden.
